# EUROPEAN PATENT APPLICATION

(11) **EP 3 798 866 A1**
(43) Date of publication of application: **31.03.2021**
(21) Application number: 20195956.6
(22) Date of filing: 14.09.2020
(51) Int. Cl.: G06F 16/738, G06F 16/74

(54) **CUSTOMIZED THUMBNAIL IMAGE GENERATION AND SELECTION FOR DIGITAL CONTENT USING COMPUTER VISION AND MACHINE LEARNING**

(30) Priority: 24.09.2019 US 201916580882
(71) Applicant: Facebook Inc., Menlo Park, California 94025 (US)
(72) Inventor: Mao, Yiqiang, Menlo Park, California 94025 (US); Chen, Yuting, Menlo Park, California 94025 (US)
(74) Representative: Murgitroyd & Company

(57) **Abstract**

According to examples, a system for providing customized and personalized thumbnail image for digital content using computer vision and machine learning may include a processor and a memory storing instructions. The processor, when executing the instructions, may cause the system to receive digital content from a digital content provider to be distributed to one or more client devices associated with one or more users. The processor may further generate a plurality of diverse thumbnail candidates based on the digital content using a thumbnail generation technique. The processor may also select a subset of thumbnails from the plurality of thumbnail candidates. The processor may then transmit at least one of the subset of thumbnail candidates to be presented with the digital content at one or more client devices.

## Description

### TECHNICAL FIELD

This patent application relates generally to image analysis and digital content processing, and more specifically, to systems and methods for generating and selecting customized and personalized thumbnail images for digital content using computer vision and machine learning.

### BACKGROUND

With recent advances in mobile technology and social media, the way people interact with digital content, such as videos or interactive media, on their mobile user devices is constantly evolving. Although vast quantities of digital content are being thrust upon users, much of that digital content is ignored because people may have unique preferences and are attracted to different things. This poses unique challenges for digital content providers and creators, such as advertisers.

### SUMMARY OF THE INVETION

Accordingly, the present invention is directed to systems, methods and non-transitory computer-readable storage media according to the appended claims.

In an aspect, the present invention is directed to a system, comprising:
a processor;
a memory storing instructions, which when executed by the processor, cause the processor to:
   receive digital content from a digital content provider to be distributed to one or more client devices associated with one or more users;
   generate a plurality of thumbnail candidates based on the digital content using a thumbnail generation technique;
   select a subset of thumbnails from the plurality of thumbnail candidates; and transmit at least one of the subset of thumbnail candidates to be presented with the digital content at one or more client devices.

In an embodiment of the system according to the present invention the thumbnail generation technique may further comprise: identifying a plurality of concepts in image stills of the digital content using a computer vision technique, wherein the computer vision technique comprises at least one of image classification, object detection, object tracking, semantic segmentation, or instance segmentation;
selecting the image stills based on distinctiveness of concepts from the identified plurality of distinct concepts; and
generating the plurality of diverse thumbnail candidates based on the selected image stills. In addition thereto, selecting the image stills may comprise scoring each of image stills with a value, wherein the value is indicative of the distinctiveness of concepts in the image stills. In addition thereto, the value for each the image stills may be used for ranking or categorizing the generated thumbnail candidates.

In an embodiment of the system according to the present invention, the subset of thumbnails may be identified by a machine learning technique as having a likelihood of stimulating user interaction to preview the digital content. In addiotion thereto, the machine learning technique may be used to identify concepts in the plurality of diverse thumbnail candidates and match the concepts with information associated with the one or more users. Alternatively or in addition, the machine learning technique may comprise use of at least one of a neural network, a tree-based model, a Bayesian network, a support vector, clustering, a kernel method, a spline, or a knowledge graph.

In an aspect, the present invention is directed to a method comprising:
receiving, by a processor, digital content from a digital content provider to be distributed to one or more client devices associated with one or more users;
identifying, by the processor, at least one concept in the digital content using a computer vision technique;
generating, by the processor, a plurality of diverse thumbnail candidates using a thumbnail generation technique based on the digital content;
selecting, by the processor, a subset of thumbnails from the plurality of thumbnail candidates; and
transmitting, by the processor, at least one of the subset of thumbnail candidates to be presented with the digital content at one or more client devices.

In an embodiment of the method according to the present invention the computer vision technique may comprise at least one of image classification, object detection, object tracking, semantic segmentation, or instance segmentation.

In an embodiment of the method according to the present invention the thumbnail generation technique may comprise scoring each of the plurality of diverse thumbnail candidates with a value. In addition, the value for each the plurality of diverse thumbnail candidates may be used for ranking the thumbnail candidates.

In an embodiment of the method according to the present invention the subset of thumbnails may be identified by a machine learning technique as having a likelihood of stimulating user interaction to preview the digital content. In addition, the machine learning technique may be used to identify concepts in the plurality of diverse thumbnail candidates and match the concepts with information associated with the one or more users. Alternatively or in addition, the machine learning technique may comprise use of at least one of a neural network, a tree-based model, a Bayesian network, a support vector, clustering, a kernel method, a spline, or a knowledge graph.

In an aspect, the present invention is directed to a non-transitory computer-readable storage medium having an executable stored thereon, which when executed instructs a processor to perform the method as described above, or to:
receive digital content from a digital content provider to be distributed to one or more client devices associated with one or more users;
generate a plurality of diverse thumbnail candidates based on the digital content using a thumbnail generation technique;
select a subset of thumbnails from the plurality of thumbnail candidates; and
transmit at least one of the selected subset of thumbnails to be presented with the digital content at one or more client devices.

In an embodiment of the non-transitory computer-readable storage medium according to the present invention, the thumbnail generation technique may further comprise use of computer vision to generate the plurality of diverse thumbnail candidates. In addition thereto, the thumbnail generation technique may comprise scoring each of the plurality of diverse thumbnail candidates with a value. In addition, the value for each the plurality of diverse thumbnail candidates may be used for ranking the thumbnail candidates.

In an embodiment of the non-transitory computer-readable storage medium according to the present invention, the subset of thumbnails may be identified by a machine learning technique as having a likelihood of stimulating user interaction to preview the digital content. In addition thereto, the machine learning technique may be used to identify concepts in the plurality of diverse thumbnail candidates and match the concepts with information associated with the one or more users.

### BRIEF DESCRIPTION OF DRAWINGS

Features of the present disclosure are illustrated by way of example and not limited in the following figures, in which like numerals indicate like elements. One skilled in the art will readily recognize from the following that alternative embodiments of the structures and methods illustrated in the figures can be employed without departing from the principles described herein.
Figure 1A illustrates a block diagram of a system for providing customized and personalized thumbnails images, according to an example.
Figure 1B illustrates a block diagram of a system environment for the system to provide customized and personalized thumbnails images, according to an example.
Figure 2A illustrates a block diagram of the system using a thumbnail generator and a thumbnail selector to provide customized and personalized thumbnails images, according to an example.
Figure 2B illustrates a block diagram of digital content creation and delivery systems using the thumbnail generator and the thumbnail selector to provide customized and personalized thumbnails images, according to an example.
Figure 3 illustrates a block diagram of a system for providing customized and personalized thumbnails images, according to an example.
Figure 4 illustrates a block diagram of a computer system for providing customized and personalized thumbnails images, according to an example.
Figure 5 illustrates a method for providing customized and personalized thumbnails images, according to an example.

### DETAILED DESCRIPTION

For simplicity and illustrative purposes, the present application is described by referring mainly to embodiments thereof. In the following description, numerous specific details are set forth in order to provide a thorough understanding of the present application. It will be readily apparent, however, that the present application may be practiced without limitation to these specific details. In other instances, some methods and structures readily understood by one of ordinary skill in the art have not been described in detail so as not to unnecessarily obscure the present application. As used herein, the terms "a" and "an" are intended to denote at least one of a particular element, the term "includes" means includes but not limited to, the term "including" means including but not limited to, and the term "based on" means based at least in part on.

Some forms of digital content, such as video or interactive media, may not always be wholly or readily presented to a user at his or her mobile computing device (e.g., smart phone or tablet). For instance, a video may be lengthy and may require a certain amount of time to consume. As a result, some digital content providers or digital content distributors may rely on the use of thumbnails as a way to "summarize" or provide a "sneak preview" of the digital content in order elicit interest from the user so that he or she may then consume or further interact with the digital content. It should be appreciated that a thumbnail may be a static image or other visual representation that is taken from a frame of the digital content, such as video or interactive media. If a user is drawn to or interested in the thumbnail that is presented at his or her mobile computing device, he or she may then decide interact with the digital content by performing an action (such as clicking on the thumbnail or other action) to watch the full video or interact with the interactive media or digital content in a more meaningful way.

One challenge associated with the use of thumbnails is that different users have different interests, preferences, and affinities. What attracts one user may not to another. What elicits a response from one user may not from another. There may a variety of elements that trigger or elicit interest in a user. These may include, among other things, subject matter, content, design, color, quality, date, time, location, season, temperature, current events, trends, context, influence of others, etc. However, conventional digital content systems ignore these elements and instead employ a static approach for creating and presenting thumbnails. For example, traditional systems may select one frame at random from the video or interactive multimedia to create a single thumbnail candidate. Once this is achieved, this randomly-selected frame may be presented universally to a multitude of users with little to no regard to the users' contexts, preferences, affinities, etc. As a result, such an approach may make it difficult to ensure generation or selection of attractive thumbnails that draw the attention of target users. Furthermore, such systems may lack a way to properly understand or track which generated or selected thumbnails are more effective than others, especially when it comes to increasing user engagement with the digital content.

Systems and methods for generating and selecting customized and personalized thumbnail image for digital content using computer vision and machine learning is disclosed herein. The systems and methods described herein may automatically generate several thumbnail candidates from frames of digital content, such as videos or interactive media, received from a content source, such as a digital content provider, creator, or distributor. The systems and methods may further employ computer vision and/or machine learning techniques, as described herein, to automatically generate a plurality of thumbnail candidates. In some embodiments, the plurality of thumbnail candidates generated may be a diverse pool of images or frames that capture or reflect one or more distinct elements. For instance, if the video includes multiple frames that depict a dog, various frames that depict a cat, and other frames that depict a whale, the system may generate at least three thumbnails - at least one thumbnail candidate presenting the dog, at least one thumbnail candidate presenting the cat, and at least one thumbnail presenting the whale. In this way, the systems and methods described herein may use computer vision and/or machine learning techniques to minimize repetition or redundancy of thumbnail subject matter (e.g., generating multiple frames of the dog or no frames of the cat or whale), and thereby increase diversity of thumbnail candidates, which when selected and matched to known or predicted user preferences, may improve likelihood of eliciting user engagement or interaction.

It should be appreciated that the computer vision and/or machine learning techniques may help identify all sorts of concepts associated with the frames or images depicted in the digital content. As used herein and throughout, the term "concept" may not only be used to point to or describe a physical thing depicted in an image, such as an object, content, or subject matter (such as a dog, cat, etc.), but may also refer to or describe other characteristics as well, such as such as sensory feeling, mood, emotion, design, color, quality, date, time, location, season, temperature, current events, trends, context, influence of others, etc. For example, a concept may include an object (such as a road sign or jewelry), a mood (such as perceived through facial expression recognition), a scene (such as beach or a mountain range), a sentiment (such as a feeling or response), and/or a design element (such as color, quality, pattern, layout, meme/slogan, etc.) Other various characteristics or elements may also be conveyed by digital content, which may be identified by one or more computer vision and/or machine learning techniques. As described above, a portion of digital content may convey an image of a dog. This digital content may therefore be identified as conveying the concept of "dog" and/or other associated qualities of that image (mood: happy, color: brown, season: fall, time: afternoon, image resolution: 4K, etc.). Although embodiments described herein are generally directed to concepts that are visually conveyed, it should be appreciated that the term "concept," as used herein and throughout, may also be used to describe any variety of concepts being conveyed by any digital content, such as auditory, sensory, or other perception, which will be apparent from the description and embodiments below.

The systems and methods may further employ machine learning techniques, as described in more detail herein, to select one or more thumbnails from the plurality of generated thumbnail candidates to present to a user. In some embodiments, the machine learning technique may select these one or more thumbnails based on concepts predicted to appeal to a user from any given pool of users. Such predictions may be achieved by using any number of personalized algorithms or other similar techniques, as described in more detail below.

In some embodiments, the machine learning technique may be an artificial intelligence (AI) based technique. For instance, in some embodiments, a Generative Adversarial Network (GAN) may be used. The GAN may include a generator that generates the images and a discriminator that determines whether the generated images will be of interest to the user based on a machine learning model. Output of the discriminator may be input to the generator to train the generator to generate images that will be increasingly likely to be interacted with by users. In some embodiments, feedback from images that were previously delivered may also be fed back to the machine learning model. It should also be appreciated that, in some embodiments, a Sparse Neural Network (SNN) may also be used. An SNN may be an artificial neural network that employs an architecture based on random or structure bipartite graph topologies. To put another way, an SNN architecture may provide compression of the models learned which may help expedite computations. In some embodiments, the SNN may allow many image properties and user preferences to be modeled as "sparse" features. Among other things, use of an SNN may help improve computational efficiency. Other various techniques may also be provided.

In some embodiments, the systems and methods described herein may also use the machine learning model to identify which of the generated thumbnail candidates may interest or draw the attention of any particular user or user group. For example, the system may detect concepts in the generated thumbnail candidates and determine whether a given audience having certain attributes may have a likelihood of interacting with the image and the associated digital content (e.g., video or interactive media) based on these detected image concepts. In some embodiments, the system may calculate and provide a score or value associated with the generated and/or selected thumbnails to facilitate creation and/or personalized distribution of these images together with the digital content to users. In this way, the systems and methods described herein may distribute digital content together with thumbnails that may stimulate greater interest in users and elicit user interaction in the digital content.

It should also be appreciated that the systems and methods described herein may be particularly suited for digital content, such as videos, animations, video games, and/or other interactive media, some or all of which may be associated with any number of online actions, advertisements, and/or financial transactions. These and other benefits will be apparent in the description provided herein.

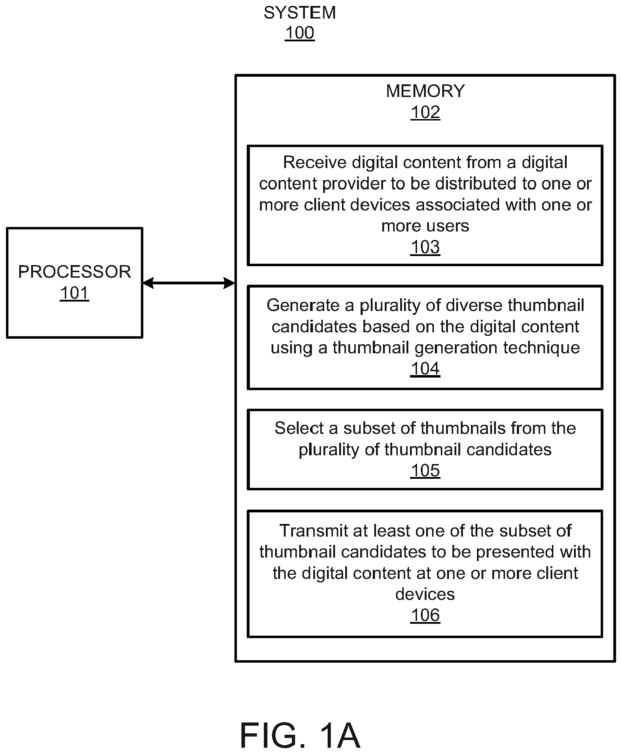

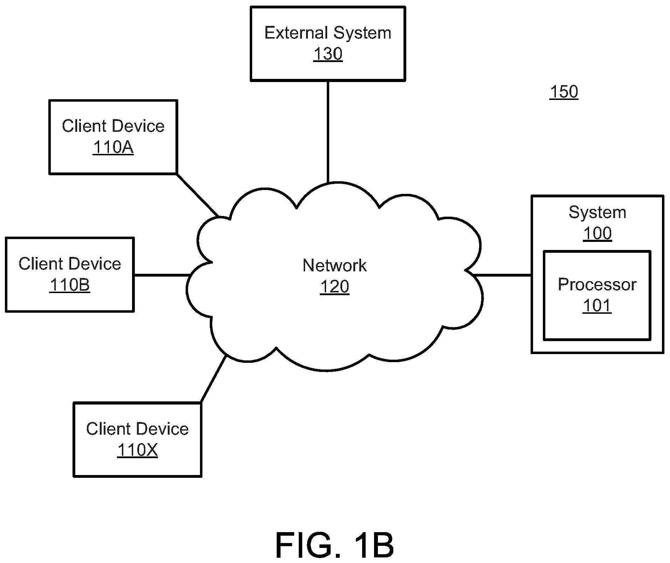

Reference is now made with respect to Figures 1A and 1B. Figure 1A illustrates a block diagram of a system 100 for providing customized and personalized thumbnails images, according to an embodiment. Figure 1B illustrates a block diagram of a system environment 150 in which the system 100 may be implemented to provide customized and personalized thumbnails images, according to an embodiment. It should be appreciated that the system 100 depicted in Figures 1A-1B and/or the system environment 150 depicted in Figure 1B may be provided as embodiments. Thus, the system 100 and/or the system environment 150 may or may not include additional features and some of the features described herein may be removed and/or modified without departing from the scopes of the system 100 and/or the system environment 150 outlined herein.

As shown in Figure 1B, the system environment 150 may include any number of client devices 110, shown as client devices 110A, 110B, and 110X, in which the variable "X" may represent an integer greater than one. The system environment 150 may also include a network 120, and an external system 130. In some embodiments, the external system 130 may be a third-party system, such as a digital content provider. It should be appreciated that the external system 130 may or may not be within control of the system 100, and may at times be referred to interchangeably as a digital content provider in the system environment 150.

In operation, the system 100 may communicate with the client devices 110, the external system 130, or other network elements via the network 120. In some embodiments, the system 100 may facilitate and/or coordinate distribution of digital content from at least the external system 130 to one or more of the client devices 110 via the network 120. In some embodiments, the system 100 may be or associated with a social networking system, a content sharing network, an advertisement system, an online system, and/or any other system that facilitates any variety of data processing in personal, social, commercial, financial, and/or enterprise environments.

In some embodiments, the system 100 may include a processor 101 and a memory 102, as shown in Figure 1A. The memory 102 may store instructions, which when executed by the processor 101, may cause the processor to: receive 103 digital content from an external system 130, such as a digital content provider, to be distributed to one or more client devices 110 associated with one or more users; generate 104 a plurality of diverse thumbnail candidates based on the digital content using a thumbnail generation technique; select 105 a subset of thumbnails from the plurality of thumbnail candidates; and transmit 106 at least one of the subset of thumbnail candidates to be presented with the digital content at one or more client devices 110. In some embodiments, the thumbnail generation technique may involve use of a computer vision technique to generate the plurality of diverse thumbnail candidates. In some embodiments, the selected subset of thumbnails may be identified by a machine learning technique as having a likelihood of stimulating user interaction and, for instance, promote the user to preview the digital content associated with at least one of the subset of thumbnails.

As described in more detail below, a digital content provider may create digital content in the form of a video or other interactive media. In order to distribute the created digital content to a plurality of users associated with the system 100 (e.g., social media or online system), the digital content provider may provide the video or interactive media to the processor 101 of the system 100. The processor 101, as instructed by machine-readable instructions stored in the memory 102, may receive 103 the created video or interactive media and generate 104 a plurality of thumbnail candidates. These thumbnail candidates may be created, for example, from static frames or images of the video or interactive media. As described in more detail below, these thumbnail candidates may be a diverse group of thumbnails based on various concepts identified or associated with the static frames or images of the digital content. The processor 101, as instructed by machine-readable instructions stored in the memory 102, may select 105 a subset of thumbnails from the plurality of thumbnail candidates using a machine learning technique, and transmit 106 at least one of the subset of thumbnail candidates to be presented with the digital content at one or more client devices 110. In some embodiments, the at least one subset of thumbnail candidates may be selected 105 and transmitted 106 in order to stimulate greater interest in users and elicit user interaction with the digital content.

Accordingly, the system 100 may enable any number of client devices 110 to interact with digital content provided by the external system 130 or other network element (not shown) of the system environment 150. By generating and selecting personalized thumbnails to encourage user interaction (e.g., preview a video), the digital content provider may be better positioned to provide more customized and personalized digital content to a plurality of users and create an environment for increased user engagement. Details of the system 100 and its operation within the system environment 150 will be described in more detail below.

It should be appreciated that the processor 101 may be a semiconductor-based microprocessor, a central processing unit (CPU), an application specific integrated circuit (ASIC), a field-programmable gate array (FPGA), and/or other suitable hardware device. In some embodiments, the memory 102 may have stored thereon machine-readable instructions 103-106 (which may also be termed computer-readable instructions) that the processor 101 may execute. The memory 102 may be an electronic, magnetic, optical, or other physical storage device that contains or stores executable instructions. The memory 102 may be, for example, Random Access memory (RAM), an Electrically Erasable Programmable Read-Only Memory (EEPROM), a storage device, an optical disc, or the like. The memory 102, which may also be referred to as a computer-readable storage medium, may be a non-transitory machine-readable storage medium, where the term "non-transitory" does not encompass transitory propagating signals.

Each of the client devices 110 may be an electronic or computing device that may transmit and/or receive data via the network 120. In this regard, each of the client devices 110 may be any device having computer functionality, such as a smartphone, a tablet, a laptop, a watch, a desktop, a server, or other electronic or computing device. In some embodiments, the client devices 110 may be mobile computing devices that are communicatively coupled to the network 120 and enabled to communicate digital content via the network 120.

In some embodiments, the client devices 110 may execute an application allowing a user of the client devices 110 to interact with various elements on the network 120. For instance, the client devices 110 may receive data from user input, a database, a file, a web service, and/or via an application programming interface (API). Additionally, the client devices 110 may execute a browser or application to enable interaction between the client devices 110, the external system 130, and/or the system 100 via the network 120. For example, a user may interact with a mobile application or a web application, executing via a browser, in order to consume or interact with digital content via the network 120. In an embodiment, the client devices 110 may interact with the system 100 and/or external system 130 through application programming interfaces (APIs) running on a native or remote operating systems of the client devices 110. Other various embodiments may also be provided.

According to some embodiments, the client devices 110 may include software for facilitating communication of digital content. For instance, the client devices 110 may have access to or include data associated with components usually hosted on other network elements, such as the system 100 and/or the external system 130. Although one or more portions of the system 100 and/or external system 130 may reside at a network centric location, as shown, it should be appreciated that any data or functionality associated with the system 100, the external system 130, and/or other network element (not shown) may also reside locally, in whole or in part, at the client devices 110, or at some other computing device communicatively coupled to the client devices 110 via or within the network 120.

The network 120 may be a local area network (LAN), a wide area network (WAN), the Internet, a cellular network, a cable network, a satellite network, or other network that facilitates communication between the client devices 110, the external system 130, the system 100, and/or any other system, component, or device connected to the network 120. The network 120 may further include one, or any number, of the exemplary types of networks mentioned above operating as a stand-alone network or in cooperation with each other. For example, the network 120 may utilize one or more protocols of one or more clients or servers to which they are communicatively coupled. The network 120 may facilitate transmission of data according to a transmission protocol of any of the devices and/or systems in the network 120. Although the network 120 is depicted as a single network in the system environment 150 of Figure 1B, it should be appreciated that, in some embodiments, the network 120 may include a plurality of interconnected networks as well.

The external system 130 may be communicatively coupled to the network 120. In some embodiments, the external system 130 may be a third-party system that provides content or data to the client devices 110, the system 100, and/or any other network element (not shown) via the network 120. In some embodiments, the external system 130 may be a digital content provider (e.g., advertisement provider) with any number of servers, hosts, systems, and/or databases for provisioning digital media content, such as videos or other interactive media, to the client devices 110, the system 100, and/or other network elements (not shown) in the system environment 150. In some embodiments, the external system 130 may include one or more application servers that host various applications for the client devices 110, the system 100, and/or other network elements (not shown) in the system environment 150.

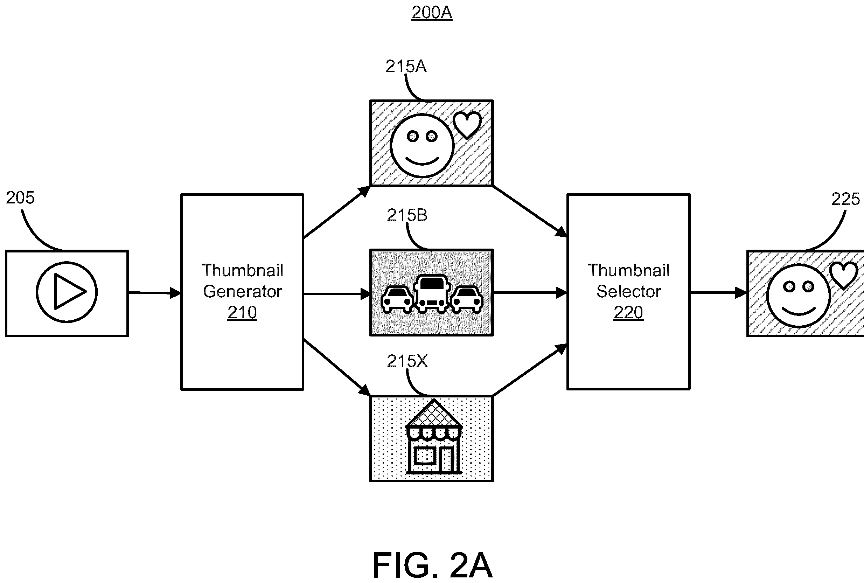

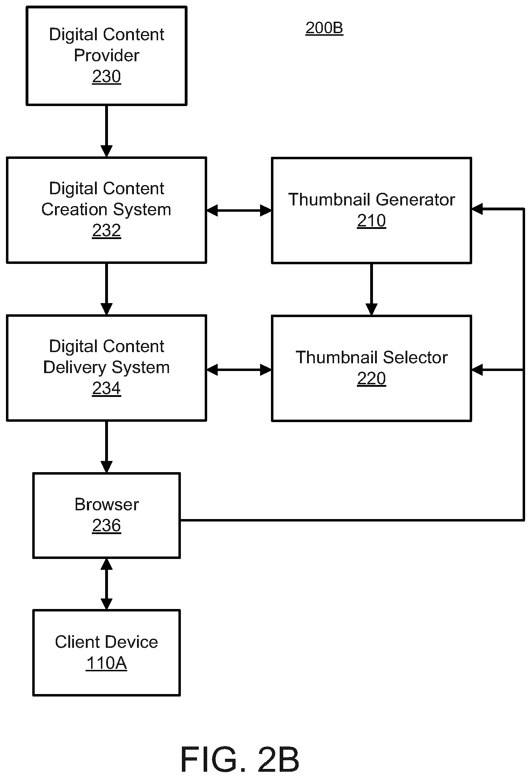

Reference is now made with respect to Figures 2A and 2B. Figure 2A illustrates a block diagram 200A of the system 100 of Figures 1A-1B using a thumbnail generator 210 and a thumbnail selector 220 to provide customized and personalized thumbnails images, according to an embodiment. Figure 2B illustrates a block diagram 200B of a digital content creation system 232 and a digital content delivery system 234 operating in conjunction with the thumbnail generator 210 and the thumbnail selector 220 to provide customized and personalized thumbnails images, according to an embodiment. It should be appreciated that the block diagrams 200A-200B depicted in Figures 2A-2B, and any associated components or elements, may be provided as embodiments. In other words, the components and elements depicted may or may not include additional features and some of the features described herein may be removed and/or modified without departing from the scopes of what is outlined herein.

The processor 101 of system 100, for example, may receive digital content 205, as shown in Figure 2A. In some embodiments, the digital content 205 may be a video, interactive media, or other content communicated via the network 120. In some embodiments, the digital content 205 may originate from an external system 130, such as a digital content provider 230, as shown in Figure 2B. The digital content creation system 232 may create the digital content 205 to ultimately be presented, for example, at a client device 110A for a user to view or with which to interact. In order to stimulate interest of any particular user and/or increase a likelihood of user interaction with the digital content 205, according to embodiments described herein, the thumbnail generator 210 may create a plurality of thumbnail candidates 215, shown as thumbnail candidates 215A, 215B, and 215X, in which the variable "X" may represent an integer greater than one.

It should be appreciated that the thumbnail generator 210 may employ any number of thumbnail generation techniques to generate the plurality of thumbnails 215. In some embodiments, one thumbnail generation technique may involve use of a computer vision technique. In this scenario, the digital content, for instance, may be a video or other interactive media that comprises a multitude of individual static frames or images. The thumbnail generator 210 may generate the plurality of thumbnail candidates 215 from any of these static frames or images, using the computer vision technique to help capture one or more concepts and thereby help generate a diverse pool of thumbnail candidates 215. For instance, if the digital content 205 includes various frames with distinct faces or facial features, other various frames with identifiable objects like automobiles, and yet additional frames with a house, then the thumbnail generator 210 may generate at least one thumbnail candidate 215A presenting a face or facial feature, at least one thumbnail candidate 215B presenting automobiles, and at least one thumbnail candidate 215X presenting a house, as shown in Figure 2B. It should be appreciated that each of these thumbnail candidates 215 may also have distinct backgrounds, colors, shapes, and/or properties or characteristics that make them even more distinct from one another. By using any number of computer vision and/or machine learning techniques, the thumbnail generator 210 may generate a diverse pool of distinct thumbnail candidates 215, which may help minimize repetition or redundancy in the thumbnail generation process. For example, the thumbnail generator 210 may identify a plurality of concepts in image stills (e.g., static frames or image) of the digital content. This may be achieved using any number of computer vision technique. The thumbnail generator 210 may then select the image stills based on distinctiveness of concepts from the identified plurality of distinct concepts. In some embodiments, this may be achieved by scoring the image stills with a value, as described herein. For instance, the value may be indicative of the distinctiveness of concepts in the image stills. The thumbnail generator 210 may then generate the plurality of diverse thumbnail candidates based on the selected image stills.

It should be appreciated that the computer vision technique employed by the thumbnail generator 210 may not only identify objects, but may be trained to identify other properties or characteristics as well, such as color, mood, tone, feeling, or other any other concept depicted in the static frames or images. Any variety or combination of computer vision techniques may be used, including, but not limited to image classification, object detection, object tracking, semantic segmentation, instance segmentation, or any other technique for acquiring, processing, and analyzing digital content, such as images or other visual content.

In some embodiments, the thumbnail generator 210 may also assign a score or value to the image stills or the generated thumbnail candidates 215A, 215B, and 215X. It should be appreciated that these scores or values may be used to help identify, rank, sort, arrange, and/or select the thumbnails most pertinent for presenting, for example, to the one or more users at the client device 110A. In some embodiments, the score or value may be also based on other image properties or characteristics, such as sharpness, object clarity, resolution, etc.

It should also be appreciated that the thumbnail generation technique described herein may also involve any number of machine learning techniques to help refine and identify of various concepts, as well as process and analyze user interaction feedback from a browser 236, as shown in Figure 2B. In short, there may a variety of elements that could trigger or elicit interest in a user. Among other things, these may include thumbnails conveying particular subject matter, content, design, color, quality, date, time, location, season, temperature, current events, trends, influence of others, etc. Applying one or more machine learning or AI-based techniques may help generate thumbnail candidates 215 that are distinct and diverse, and when a subset is selected from this diverse pool of thumbnail candidates 215 to be presented to a user at his or her client device 110A, it may help induce or elicit user interaction with the digital content 205 based on at least the user's personal preferences or affinities.

In some embodiments, a diverse pool of distinct thumbnail candidates 215 may also be obtained or generated with or without computer vision or AI-based machine learning techniques. For instance, the thumbnail generator 210 may apply a predetermined minimum frame distance from which to extract, use, or replicate individual static frames from the digital content 205. In other words, since a video may typically present similar concepts within a series of nearby frames, by setting a predetermined minimum frame distance, say 50 frames, may help the thumbnail generator 210 pull frames that are a sufficiently separated (e.g., in time or position) to increase probability that the concepts separated by the predetermined minimum frame distance may be different or diverse, with or without use of computer vision and/or machine learning. For digital content 205 that take up more storage or are made up of more frames (e.g., longer videos), the application of a predetermined minimum frame distance when generating thumbnail candidates may be particularly helpful to increase efficiency. In this way, rather than combing through each frame of a video to identify distinct concepts, the thumbnail generator 210 may skip frames, according to the predetermined minimum frame distance, to identify distinct concepts. Other various configurations or options may also be provided to increase efficiency and diversity of generated thumbnail candidates 215.

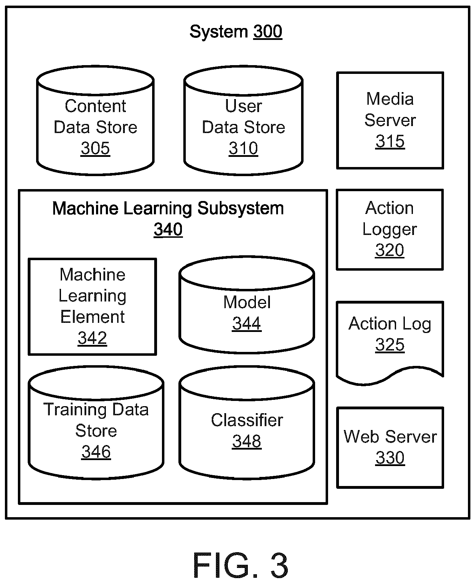

Figure 3 illustrates a block diagram of a system 300 for providing customized and personalized thumbnails images, according to an embodiment. It should be appreciated that the system 300 may be similar to, a part of, or a variation of the system 100 as described with respect with Figures 1-2, but the system 300 may be described with more specificity and/or with embodiments of additional capabilities and features that may or may not be a part of system 100. In some embodiments, the system 300 may be an online system having a machine learning subsystem 340 to help facilitate generation and selection of customized and personalized thumbnails images from digital content to be provided to any number of client devices 110. As shown, the system 300 may include a content data store 305, a user data store 310, a media server 315, an action logger 320, an action log 325, and a web server 330.

The content data store 305 may store, among other things, a variety of content associated with provisioning digital content (e.g., video or interactive media) to users, as described herein. For example, the content data store 305 may store digital content provided by a digital content provider or other source. The content data store 305 may also store information associated with digital content, such as size, length, type, format, etc. Other information associated with content may also be stored.

The user data store 310 may also store, among other things, data associated with users. This data may include user profile information directly provided by a user or inferred by the system 300. Embodiments of such information may include biographic, demographic, pictorial, and/or other types of descriptive information, such as employment, education, financial, gender, hobbies, preferences, location, etc. It should be appreciated that any personal information that is acquired or stored at the user data store 310 may be subject to various privacy settings or regulations, as described below.

The media server 315 may be used, among other things, to gather, distribute, deliver, and/or provision various digital content, e.g., stored in the content data store 305 or elsewhere. The media server 315 may be used by system 300 to coordinate with the external system 130 of Figure 1B, for example, which may be a digital content provider of various interactive content, such as videos, video games, advertisements, or other content. In this way, digital content may be provisioned for one or more users at their respective client devices 110.

The system 300 may also include an action logger 320, an action log 325, and a web server 330. In some embodiments, the action logger 320 may receive communications about user actions performed on or off the system 100 or 300, and may populate the action log 325 with information about various user actions. Such user actions may include, for example, adding a connection to another user or entity, sending a message from another user or entity, viewing content associated with another user or entity (such as another user or an advertisement), initiating a payment transaction, etc. In some embodiments, the action logger 320 may receive, subject to one or more privacy settings or rules, content interaction activities associated with another user or entity. In addition, a number of actions described in connection with other objects or concepts may be directed at particular users, so these actions may be associated with those users as well. Any or all of these user actions may also be stored in the action log 325.

The action log 325 may track user actions on the system 300 or other external systems. The action log 325 may also include context information associated with context of user actions. For example, such content information may include date/time an action is performed, other actions logged around the similar date/time period, or other associated actions. Other context information may include user action patterns, patterns exhibited by other similar users, or even various interactions a user may have with any particular or similar object or concept. These and other similar actions or other similar information may be stored at the action log 325 and may be used for providing customized and personalized thumbnails images, as described herein.

The web server 330 may link the system 300 via a network (e.g., network 120 of Figure 1B) to one or more client devices (e.g., client devices 110 of Figure 1B). The web server 330 may serve web pages, as well as other web-related content, such as Java, Flash, XML, or other similar content. The web server 330 may communicate with various internal elements of the system 300 or external network components to provide various functionalities, such as receiving, transmitting, and/or routing content between the system 300, the external system 130, the client devices 110, and other network components.

As described herein, the system 300 may also include a machine learning subsystem 340. The machine learning subsystem 340 may employ one or more computer vision and/or machine learning techniques to help define, modify, track, schedule, execute, compare, analyze, evaluate, and/or deploy one or more applications providing customized and personalized thumbnails images using the system 300. In some embodiments, the machine learning subsystem 340 may also employ any variety of computer vision and/or machine learning techniques to generate and/or select customized and personalized thumbnails images associated with various digital content. In some embodiments, the machine learning subsystem 340 may generate and/or select customized and personalized thumbnails using information in the digital content itself, as well as information from any number of client devices 110, the external system 130, the system 100 or 300, or other network element. In some embodiments, the machine learning subsystem 340 may include a machine learning element 342, a model 344, a training data store 546, and a classifier 548.

In particular, the machine learning element 342 of the system 300 may assist the thumbnail generator 210 and/or the thumbnail selector 220 of Figures 2A-2B. Specifically, the machine learning element 342 may train the model 344 based on training data included in a training data store 346. The machine learning element 342 may also train a classifier 348 based on the training data. The classifier 348 may be used to assess and identify concepts in digital content created for user deployment, including content information from content store 505. Based on these assessments, the machine learning element 342 may help the system 300 generate a plurality of diverse thumbnail candidates and/or select a subset of thumbnails from the plurality of thumbnail candidates that may be effective in eliciting user response to or interaction with the associated digital content.

The system 300 may use the machine learning element 342 to generate the model 344 and the classifier 348. The model 344 generated may provide a framework for assessing, evaluating, and identifying concepts for the purposes of image or digital content analysis. In some embodiments, the model 344 may include a set of weights associated with a set of features for generating a score or value as a weighted aggregation of scores or values associated with various features or concepts associated with the digital content. In other embodiments, the model 344 may include a set of weights along with instructions for aggregating weights for generation of an output score or value.

In some embodiments, a vector or array generator (not shown) may use the model 344 to generate a vector or array that represents the characteristics of a transaction that contribute to server capabilities, especially in image analysis or other similar digital content processing. The machine learning element 342 may also generate a classifier 348 that takes input from the model 344, such as the vector or array generated using the model 344, to return an identification of whether the content represented by the vector may help determine concepts in the digital content for the purposes of thumbnail generation and/or selection. In order to generate the vector or array, the training data may be provided as a matrix format. In some embodiments, the classifier 348 generated by the machine learning element 342 may be a single classifier or multiple classifiers. These scores or values may help the machine learning element 342 analyze, determine, rank, sort, arrange, and/or categorize generated thumbnails. It should be appreciated that the machine learning element 342 may also help refine, configure, or calibrate the processor 101 for generating/selecting thumbnails based on user interaction (or lack thereof).

The machine learning element 342 may ingest the training data from the training data store 346 to generate the model 344 and any classifier 348. The training data store 346 may include any previously analyzed content and data describing the content, such as data stored in the content store 505. In some embodiments, the training data may not provide data specific to a digital content or thumbnail, and instead may merely indicate whether or not that digital content or thumbnail may be more likely to succeed or fail at eliciting user interaction. The training data store 346 may include data obtained from the content store 505, action log 515, and/or other internal or external source.

The machine learning element 342 may generate the model 344 based on optimization of different types of content analysis models, including but not limited to, image analysis algorithms for generating thumbnails and/or personalized algorithms for selecting thumbnails. For example, the generated model 344 may include a neural network (e.g., a convolutional neural network (CNN), a sparse neural network (SNN), etc.), a tree-based model, a Bayesian network, a support vector, clustering, a kernel method, a spline, a knowledge graph, or an ensemble of one or more of these and other techniques. The machine learning element 342 may determine the weights of the model 344, e.g., the weights of edges of a neural network corresponding to the model 344. The machine learning element 342 may further generate a classifier 348 that may use such techniques. The machine learning element 342 may periodically update the model 344 and/or classifier 348 based on additional training or updated data associated with the system 300.

It should be appreciated that the machine learning element 342 may vary depending on the type of input or output requirements and/or the type of task or problem intended to be solved. The machine learning element 342, as described herein, may use supervised learning, semi-supervised, or unsupervised learning to build the model 344 using data in the training data store 346. In some embodiments, supervised learning may include classification and/or regression, and semi-supervised learning may include iterative optimization using objection functions to fill in gaps when at least some of the outputs are missing. It should also be appreciated that the system 300 may provide other types of machine learning approaches, such as reinforcement learning, feature learning, anomaly detection, etc.

It should be appreciated that classification algorithms may provide assignment of instances to pre-defined classes to decide whether there are matches or correlations. Alternatively, clustering schemes or techniques may use groupings of related data points without labels. Use of knowledge graphs may provide an organized graph that ties nodes and edges, where a node may be related to semantic concepts, such as persons, objects, entities, events, etc., and an edge may be defined by relations between nodes based on semantics. It should be appreciated that, as described herein, the term "node" may be used interchangeably with "entity," and "edge" with "relation." Also, techniques that involve simulation models and/or decision trees may provide a detailed and flexible approach to providing customized and personalized thumbnails images, as described herein.

It should be appreciated that the systems and subsystems shown herein, as described herein, may include one or more servers or computing devices. Each of these servers or computing devices may further include a platform and at least one application. An application may include software (e.g., machine-readable instructions) stored on a non-transitory computer readable medium and executable by a processor. A platform may be an environment on which an application is designed to run. For example, a platform may include hardware to execute the application, an operating system (OS), and runtime libraries. The application may be compiled to run on the platform. The runtime libraries may include low-level routines or subroutines called by the application to invoke some behaviors, such as exception handling, memory management, etc., of the platform at runtime. A subsystem may be similar to a platform and may include software and hardware to run various software or applications.

While the servers, systems, subsystems, and/or other computing devices may be shown as single components or elements, it should be appreciated that one of ordinary skill in the art would recognize that these single components or elements may represent multiple components or elements, and that these components or elements may be connected via one or more networks. Also, middleware (not shown) may be included with any of the elements or components described herein. The middleware may include software hosted by one or more servers. Furthermore, it should be appreciated that some of the middleware or servers may or may not be needed to achieve functionality. Other types of servers, middleware, systems, platforms, and applications not shown may also be provided at the front-end or back-end to facilitate the features and functionalities of the system 100 or 300.

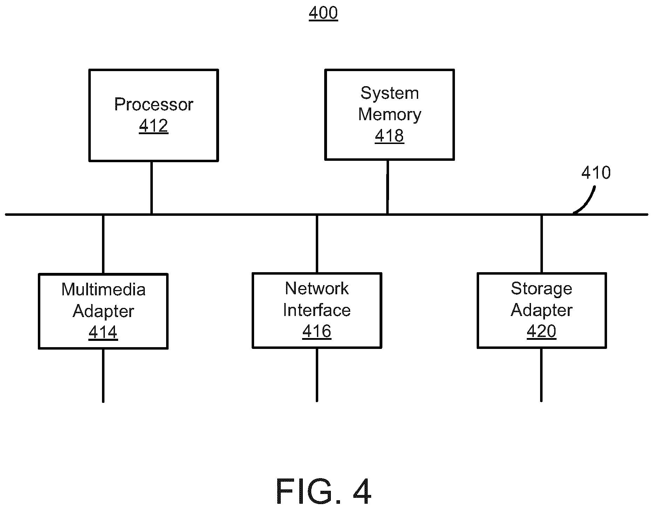

Figure 4 illustrates a block diagram of a computer system for providing customized and personalized thumbnails images, according to an embodiment. The computer system 400 may be part of or any one of the client devices 110, the external system 130, and/or the system 100 and/or 300 to perform the functions and features described herein. The computer system 400 may include, among other things, an interconnect 410, a processor 412, a multimedia adapter 414, a network interface 416, a system memory 418, and a storage adapter 420.

The interconnect 410 may interconnect various subsystems, elements, and/or components of the computer system 400. As shown, the interconnect 410 may be an abstraction that may represent any one or more separate physical buses, point-to-point connections, or both, connected by appropriate bridges, adapters, or controllers. In some embodiments, the interconnect 410 may include a system bus, a peripheral component interconnect (PCI) bus or PCI-Express bus, a HyperTransport or industry standard architecture (ISA)) bus, a small computer system interface (SCSI) bus, a universal serial bus (USB), IIC (12C) bus, or an Institute of Electrical and Electronics Engineers (IEEE) standard 1394 bus, or "firewire," or other similar interconnection element.

In some embodiments, the interconnect 410 may allow data communication between the processor 412 and system memory 418, which may include read-only memory (ROM) or flash memory (neither shown), and random access memory (RAM) (not shown). It should be appreciated that the RAM may be the main memory into which an operating system and various application programs may be loaded. The ROM or flash memory may contain, among other code, the Basic Input-Output system (BIOS) which controls basic hardware operation such as the interaction with one or more peripheral components.

The processor 412 may be the central processing unit (CPU) of the computing device and may control overall operation of the computing device. In some embodiments, the processor 412 may accomplish this by executing software or firmware stored in system memory 418 or other data via the storage adapter 420. The processor 412 may be, or may include, one or more programmable general-purpose or special-purpose microprocessors, digital signal processors (DSPs), programmable controllers, application specific integrated circuits (ASICs), programmable logic device (PLDs), trust platform modules (TPMs), field-programmable gate arrays (FPGAs), other processing circuits, or a combination of these and other devices.

The multimedia adapter 414 may connect to various multimedia elements or peripherals. These may include a devices associated with visual (e.g., video card or display), audio (e.g., sound card or speakers), and/or various input/output interfaces (e.g., mouse, keyboard, touchscreen).

The network interface 416 may provide the computing device with an ability to communicate with a variety of remove devices over a network (e.g., network 120 of Figure 1) and may include, for example, an Ethernet adapter, a Fibre Channel adapter, and/or other wired- or wireless-enabled adapter. The network interface 416 may provide a direct or indirect connection from one network element to another, and facilitate communication and between various network elements.

The storage adapter 420 may connect to a standard computer-readable medium for storage and/or retrieval of information, such as a fixed disk drive (internal or external).

Many other devices, components, elements, or subsystems (not shown) may be connected in a similar manner to the interconnect 410 or via a network (e.g., network 120 of Figure 1B). Conversely, all of the devices shown in Fig. 4 need not be present to practice the present disclosure. The devices and subsystems can be interconnected in different ways from that shown in Fig. 4. Code to implement the dynamic approaches for payment gateway selection and payment transaction processing of the present disclosure may be stored in computer-readable storage media such as one or more of system memory 418 or other storage. Code to implement the dynamic approaches for payment gateway selection and payment transaction processing of the present disclosure may also be received via one or more interfaces and stored in memory. The operating system provided on system 100 or 300 may be MS-DOS®, MS-WINDOWSO, OS/2®, OS X®, IOS®, ANDROID®, UNIX®, Linux®, or another operating system.

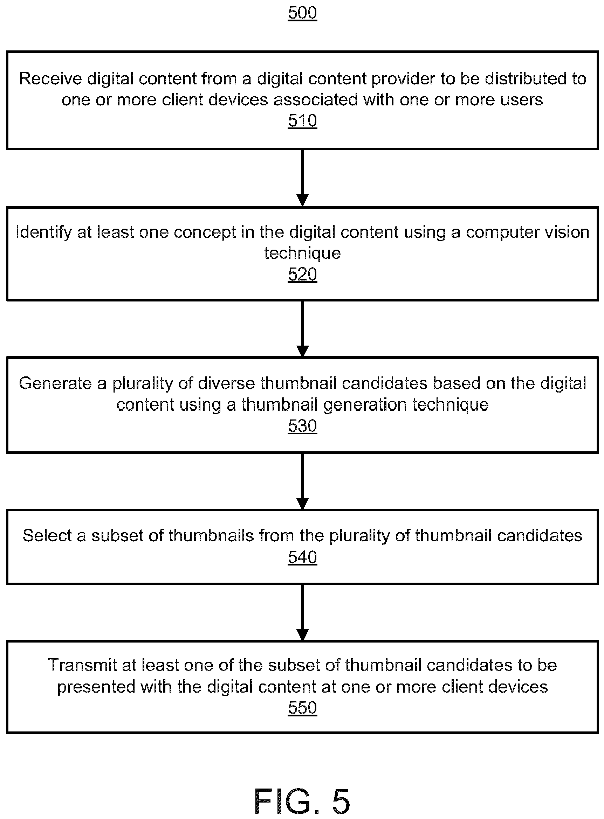

Figure 5 illustrates a method 500 for providing customized and personalized thumbnails images, according to an embodiment. The method 500 is provided by way of example, as there may be a variety of ways to carry out the method described herein. Although the method 500 is primarily described as being performed by system 100 as shown in Figures 1A-1B, system 300 as shown in Figure 3, or computer system 400 of Figure 4, the method 500 may be executed or otherwise performed by other systems, or a combination of systems. Each block shown in Figure 5 may further represent one or more processes, methods, or subroutines, and one or more of the blocks may include machine-readable instructions stored on a non-transitory computer-readable medium and executed by a processor or other type of processing circuit to perform one or more operations described herein.

At 510, the processor 101 may receive digital content 205. In some embodiments, the processor 101 may receive digital content 205 from an external system 130, such as a digital content provider (e.g., an advertiser), to be distributed to one or more client devices 110 associated with one or more users.

At 520, the processor 101 may identify concepts in the digital content 205. In some embodiments, the concepts may be identified by using a computer vision technique, such as image classification, object detection, object tracking, semantic segmentation, instance segmentation, or any other technique or combination of techniques as described above.

At 530, the processor 101 may generate a plurality of diverse thumbnail candidates 215 based on the digital content 205 using a thumbnail generation technique. In some embodiments, the thumbnail generation technique may include scoring each of the plurality of diverse thumbnail candidates 215 with a value. As described above, the value for each the plurality of diverse thumbnail candidates 215 may be used for ranking the thumbnail candidates 215.

At 540, the processor 101 may select a subset of thumbnails 225 from the plurality of thumbnail candidates 215. In some embodiments, the subset of thumbnails 225 may be identified by a machine learning technique as having a likelihood of stimulating user interaction to preview the digital content. As described above, the machine learning technique may be used to match identified concepts in the plurality of diverse thumbnail candidates 215 with information associated with the one or more users. In some embodiments, the machine learning technique may include use of a neural network, a tree-based model, a Bayesian network, a support vector, clustering, a kernel method, a spline, a knowledge graph, and/or any other machine leaning technique.

At 550, the processor 101 may transmit at least one of the selected subset of thumbnails 225 to be presented. In some embodiments, the selected subset of thumbnails 225 may be presented with the digital content 205 at one or more client devices 110.

By generating and/or selecting customized and personalized thumbnail image for digital content using computer vision and machine learning as described herein, the systems and methods described herein may also improve likelihood of user interaction with the digital content, maximize user reach, provide more directed digital content delivery, and minimize inefficient digital content consumption. It should be appreciated that embodiments described herein may have a flexible structure and offer many advantages over other solutions.

Although the methods and systems as described herein may be directed mainly to digital content, such as videos or interactive media, it should be appreciated that the system 100 may be used for other types of content or scenarios as well. Furthermore, the system 100 may also use the techniques disclosed herein in other various environments, such as digital content distribution and delivery, including, but not limited to digital content processing or transactions, image analysis, advertisements and marketing, customer engagement, payment transactions, online transactions, mobile transactions, user-to-user transactions, toll-based transactions, and/or digital transactions. Other applications or uses of the system 100 may also include social networking, competitive, marketing, performance analysis, risk analysis, data management, content-based recommendation engines, and/or other types of knowledge or data-driven systems.

It should be noted that the functionality described herein may be subject to one or more privacy policies, described below, enforced by the system 100 that may bar use of images for concept detection, recommendation, generation, and analysis.

In particular embodiments, one or more objects (e.g., content or other types of objects) of a computing system may be associated with one or more privacy settings. The one or more objects may be stored on or otherwise associated with any suitable computing system or application, such as, for example, the system 100, the client devices 110, the external system 130, a social-networking application, a messaging application, a photo-sharing application, or any other suitable computing system or application. Although the embodiments discussed herein are in the context of an online social network, these privacy settings may be applied to any other suitable computing system. Privacy settings (or "access settings") for an object may be stored in any suitable manner, such as, for example, in association with the object, in an index on an authorization server, in another suitable manner, or any suitable combination thereof. A privacy setting for an object may specify how the object (or particular information associated with the object) can be accessed, stored, or otherwise used (e.g., viewed, shared, modified, copied, executed, surfaced, or identified) within the online social network. When privacy settings for an object allow a particular user or other entity to access that object, the object may be described as being "visible" with respect to that user or other entity. As an example and not by way of limitation, a user of the online social network may specify privacy settings for a user-profile page that identify a set of users that may access work-experience information on the user-profile page, thus excluding other users from accessing that information.

In particular embodiments, privacy settings for an object may specify a "blocked list" of users or other entities that should not be allowed to access certain information associated with the object. In particular embodiments, the blocked list may include third-party entities. The blocked list may specify one or more users or entities for which an object is not visible. As an example and not by way of limitation, a user may specify a set of users who may not access photo albums associated with the user, thus excluding those users from accessing the photo albums (while also possibly allowing certain users not within the specified set of users to access the photo albums). In particular embodiments, privacy settings may be associated with particular social-graph elements. Privacy settings of a social-graph element, such as a node or an edge, may specify how the social-graph element, information associated with the social-graph element, or objects associated with the social-graph element can be accessed using the online social network. As an example and not by way of limitation, a particular concept node corresponding to a particular photo may have a privacy setting specifying that the photo may be accessed only by users tagged in the photo and friends of the users tagged in the photo. In particular embodiments, privacy settings may allow users to opt in to or opt out of having their content, information, or actions stored/logged by the system 100 or shared with other systems (e.g., an external system 130). Although this disclosure describes using particular privacy settings in a particular manner, this disclosure contemplates using any suitable privacy settings in any suitable manner.

In particular embodiments, the system 100 may present a "privacy wizard" (e.g., within a webpage, a module, one or more dialog boxes, or any other suitable interface) to the first user to assist the first user in specifying one or more privacy settings. The privacy wizard may display instructions, suitable privacy-related information, current privacy settings, one or more input fields for accepting one or more inputs from the first user specifying a change or confirmation of privacy settings, or any suitable combination thereof. In particular embodiments, the system 100 may offer a "dashboard" functionality to the first user that may display, to the first user, current privacy settings of the first user. The dashboard functionality may be displayed to the first user at any appropriate time (e.g., following an input from the first user summoning the dashboard functionality, following the occurrence of a particular event or trigger action). The dashboard functionality may allow the first user to modify one or more of the first user's current privacy settings at any time, in any suitable manner (e.g., redirecting the first user to the privacy wizard).

Privacy settings associated with an object may specify any suitable granularity of permitted access or denial of access. As an example and not by way of limitation, access or denial of access may be specified for particular users (e.g., only me, my roommates, my boss), users within a particular degree-of-separation (e.g., friends, friends-of-friends), user groups (e.g., the gaming club, my family), user networks (e.g., employees of particular employers, students or alumni of particular university), all users ("public"), no users ("private"), users of third-party systems, particular applications (e.g., third-party applications, external websites), other suitable entities, or any suitable combination thereof. Although this disclosure describes particular granularities of permitted access or denial of access, this disclosure contemplates any suitable granularities of permitted access or denial of access.

In particular embodiments, different objects of the same type associated with a user may have different privacy settings. Different types of objects associated with a user may have different types of privacy settings. As an example and not by way of limitation, a first user may specify that the first user's status updates are public, but any images shared by the first user are visible only to the first user's friends on the online social network. As another example and not by way of limitation, a user may specify different privacy settings for different types of entities, such as individual users, friends-of-friends, followers, user groups, or corporate entities. As another example and not by way of limitation, a first user may specify a group of users that may view videos posted by the first user, while keeping the videos from being visible to the first user's employer. In particular embodiments, different privacy settings may be provided for different user groups or user demographics. As an example and not by way of limitation, a first user may specify that other users who attend the same university as the first user may view the first user's pictures, but that other users who are family members of the first user may not view those same pictures.

In particular embodiments, the system 100 may provide one or more default privacy settings for each object of a particular object-type. A privacy setting for an object that is set to a default may be changed by a user associated with that object. As an example and not by way of limitation, all images posted by a first user may have a default privacy setting of being visible only to friends of the first user and, for a particular image, the first user may change the privacy setting for the image to be visible to friends and friends-of-friends.

In particular embodiments, privacy settings may allow a first user to specify (e.g., by opting out, by not opting in) whether the system 100 may receive, collect, log, or store particular objects or information associated with the user for any purpose. In particular embodiments, privacy settings may allow the first user to specify whether particular applications or processes may access, store, or use particular objects or information associated with the user. The privacy settings may allow the first user to opt in or opt out of having objects or information accessed, stored, or used by specific applications or processes. The system 100 may access such information in order to provide a particular function or service to the first user, without the system 100 having access to that information for any other purposes. Before accessing, storing, or using such objects or information, the system 100 may prompt the user to provide privacy settings specifying which applications or processes, if any, may access, store, or use the object or information prior to allowing any such action. As an example and not by way of limitation, a first user may transmit a message to a second user via an application related to the online social network (e.g., a messaging app), and may specify privacy settings that such messages should not be stored by the system 100.

In particular embodiments, a user may specify whether particular types of objects or information associated with the first user may be accessed, stored, or used by the system 100. As an example and not by way of limitation, the first user may specify that images sent by the first user through the system 100 may not be stored by the system 100. As another example and not by way of limitation, a first user may specify that messages sent from the first user to a particular second user may not be stored by the system 100. As yet another example and not by way of limitation, a first user may specify that all objects sent via a particular application may be saved by the system 100.

In particular embodiments, privacy settings may allow a first user to specify whether particular objects or information associated with the first user may be accessed from client devices 110 or external systems 130. The privacy settings may allow the first user to opt in or opt out of having objects or information accessed from a particular device (e.g., the phone book on a user's smart phone), from a particular application (e.g., a messaging app), or from a particular system (e.g., an email server). The system 100 may provide default privacy settings with respect to each device, system, or application, and/or the first user may be prompted to specify a particular privacy setting for each context. As an example and not by way of limitation, the first user may utilize a location-services feature of the system 100 to provide recommendations for restaurants or other places in proximity to the user. The first user's default privacy settings may specify that the system 100 may use location information provided from one of the client devices 110 of the first user to provide the location-based services, but that the system 100 may not store the location information of the first user or provide it to any external system 130. The first user may then update the privacy settings to allow location information to be used by a third-party image-sharing application in order to geo-tag photos.

In particular embodiments, privacy settings may allow a user to specify whether current, past, or projected mood, emotion, or sentiment information associated with the user may be determined, and whether particular applications or processes may access, store, or use such information. The privacy settings may allow users to opt in or opt out of having mood, emotion, or sentiment information accessed, stored, or used by specific applications or processes. The system 100 may predict or determine a mood, emotion, or sentiment associated with a user based on, for example, inputs provided by the user and interactions with particular objects, such as pages or content viewed by the user, posts or other content uploaded by the user, and interactions with other content of the online social network. In particular embodiments, the system 100 may use a user's previous activities and calculated moods, emotions, or sentiments to determine a present mood, emotion, or sentiment. A user who wishes to enable this functionality may indicate in their privacy settings that they opt in to the system 100 receiving the inputs necessary to determine the mood, emotion, or sentiment. As an example and not by way of limitation, the system 100 may determine that a default privacy setting is to not receive any information necessary for determining mood, emotion, or sentiment until there is an express indication from a user that the system 100 may do so. By contrast, if a user does not opt in to the system 100 receiving these inputs (or affirmatively opts out of the system 100 receiving these inputs), the system 100 may be prevented from receiving, collecting, logging, or storing these inputs or any information associated with these inputs. In particular embodiments, the system 100 may use the predicted mood, emotion, or sentiment to provide recommendations or advertisements to the user. In particular embodiments, if a user desires to make use of this function for specific purposes or applications, additional privacy settings may be specified by the user to opt in to using the mood, emotion, or sentiment information for the specific purposes or applications. As an example and not by way of limitation, the system 100 may use the user's mood, emotion, or sentiment to provide newsfeed items, pages, friends, or advertisements to a user. The user may specify in their privacy settings that the system 100 may determine the user's mood, emotion, or sentiment. The user may then be asked to provide additional privacy settings to indicate the purposes for which the user's mood, emotion, or sentiment may be used. The user may indicate that the system 100 may use his or her mood, emotion, or sentiment to provide newsfeed content and recommend pages, but not for recommending friends or advertisements. The system 100 may then only provide newsfeed content or pages based on user mood, emotion, or sentiment, and may not use that information for any other purpose, even if not expressly prohibited by the privacy settings.

In particular embodiments, privacy settings may allow a user to engage in the ephemeral sharing of objects on the online social network. Ephemeral sharing refers to the sharing of objects (e.g., posts, photos) or information for a finite period of time. Access or denial of access to the objects or information may be specified by time or date. As an example and not by way of limitation, a user may specify that a particular image uploaded by the user is visible to the user's friends for the next week, after which time the image may no longer be accessible to other users. As another example and not by way of limitation, a company may post content related to a product release ahead of the official launch, and specify that the content may not be visible to other users until after the product launch.

In particular embodiments, for particular objects or information having privacy settings specifying that they are ephemeral, the system 100 may be restricted in its access, storage, or use of the objects or information. The system 100 may temporarily access, store, or use these particular objects or information in order to facilitate particular actions of a user associated with the objects or information, and may subsequently delete the objects or information, as specified by the respective privacy settings. As an example and not by way of limitation, a first user may transmit a message to a second user, and the system 100 may temporarily store the message in a content data store until the second user has viewed or downloaded the message, at which point the system 100 may delete the message from the data store. As another example and not by way of limitation, continuing with the prior example, the message may be stored for a specified period of time (e.g., 2 weeks), after which point the system 100 may delete the message from the content data store.

In particular embodiments, privacy settings may allow a user to specify one or more geographic locations from which objects can be accessed. Access or denial of access to the objects may depend on the geographic location of a user who is attempting to access the objects. As an example and not by way of limitation, a user may share an object and specify that only users in the same city may access or view the object. As another example and not by way of limitation, a first user may share an object and specify that the object is visible to second users only while the first user is in a particular location. If the first user leaves the particular location, the object may no longer be visible to the second users. As another example and not by way of limitation, a first user may specify that an object is visible only to second users within a threshold distance from the first user. If the first user subsequently changes location, the original second users with access to the object may lose access, while a new group of second users may gain access as they come within the threshold distance of the first user.

In particular embodiments, the system 100 may have functionalities that may use, as inputs, personal or biometric information of a user for user-authentication or experience-personalization purposes. A user may opt to make use of these functionalities to enhance their experience on the online social network. As an example and not by way of limitation, a user may provide personal or biometric information to the system 100. The user's privacy settings may specify that such information may be used only for particular processes, such as authentication, and further specify that such information may not be shared with any external system 130 or used for other processes or applications associated with the system 100. As another example and not by way of limitation, the system 100 may provide a functionality for a user to provide voice-print recordings to the online social network. As an example and not by way of limitation, if a user wishes to utilize this function of the online social network, the user may provide a voice recording of his or her own voice to provide a status update on the online social network. The recording of the voice-input may be compared to a voice print of the user to determine what words were spoken by the user. The user's privacy setting may specify that such voice recording may be used only for voice-input purposes (e.g., to authenticate the user, to send voice messages, to improve voice recognition in order to use voice-operated features of the online social network), and further specify that such voice recording may not be shared with any external system 130 or used by other processes or applications associated with the system 100. As another example and not by way of limitation, the system 100 may provide a functionality for a user to provide a reference image (e.g., a facial profile, a retinal scan) to the online social network. The online social network may compare the reference image against a later-received image input (e.g., to authenticate the user, to tag the user in photos). The user's privacy setting may specify that such voice recording may be used only for a limited purpose (e.g., authentication, tagging the user in photos), and further specify that such voice recording may not be shared with any external system 130 or used by other processes or applications associated with the system 100.

In particular embodiments, changes to privacy settings may take effect retroactively, affecting the visibility of objects and content shared prior to the change. As an example and not by way of limitation, a first user may share a first image and specify that the first image is to be public to all other users. At a later time, the first user may specify that any images shared by the first user should be made visible only to a first user group. The system 100 may determine that this privacy setting also applies to the first image and make the first image visible only to the first user group. In particular embodiments, the change in privacy settings may take effect only going forward. Continuing the example above, if the first user changes privacy settings and then shares a second image, the second image may be visible only to the first user group, but the first image may remain visible to all users. In particular embodiments, in response to a user action to change a privacy setting, the system 100 may further prompt the user to indicate whether the user wants to apply the changes to the privacy setting retroactively. In particular embodiments, a user change to privacy settings may be a one-off change specific to one object. In particular embodiments, a user change to privacy may be a global change for all objects associated with the user.

In particular embodiments, the system 100 may determine that a first user may want to change one or more privacy settings in response to a trigger action associated with the first user. The trigger action may be any suitable action on the online social network. As an example and not by way of limitation, a trigger action may be a change in the relationship between a first and second user of the online social network (e.g., "un-friending" a user, changing the relationship status between the users). In particular embodiments, upon determining that a trigger action has occurred, the system 100 may prompt the first user to change the privacy settings regarding the visibility of objects associated with the first user. The prompt may redirect the first user to a workflow process for editing privacy settings with respect to one or more entities associated with the trigger action. The privacy settings associated with the first user may be changed only in response to an explicit input from the first user, and may not be changed without the approval of the first user. As an example and not by way of limitation, the workflow process may include providing the first user with the current privacy settings with respect to the second user or to a group of users (e.g., un-tagging the first user or second user from particular objects, changing the visibility of particular objects with respect to the second user or group of users), and receiving an indication from the first user to change the privacy settings based on any of the methods described herein, or to keep the existing privacy settings.

In particular embodiments, a user may need to provide verification of a privacy setting before allowing the user to perform particular actions on the online social network, or to provide verification before changing a particular privacy setting. When performing particular actions or changing a particular privacy setting, a prompt may be presented to the user to remind the user of his or her current privacy settings and to ask the user to verify the privacy settings with respect to the particular action. Furthermore, a user may need to provide confirmation, double-confirmation, authentication, or other suitable types of verification before proceeding with the particular action, and the action may not be complete until such verification is provided. As an example and not by way of limitation, a user's default privacy settings may indicate that a person's relationship status is visible to all users (i.e., "public"). However, if the user changes his or her relationship status, the system 100 may determine that such action may be sensitive and may prompt the user to confirm that his or her relationship status should remain public before proceeding. As another example and not by way of limitation, a user's privacy settings may specify that the user's posts are visible only to friends of the user. However, if the user changes the privacy setting for his or her posts to being public, the system 100 may prompt the user with a reminder of the user's current privacy settings of posts being visible only to friends, and a warning that this change will make all of the user's past posts visible to the public. The user may then be required to provide a second verification, input authentication credentials, or provide other types of verification before proceeding with the change in privacy settings. In particular embodiments, a user may need to provide verification of a privacy setting on a periodic basis. A prompt or reminder may be periodically sent to the user based either on time elapsed or a number of user actions. As an example and not by way of limitation, the system 100 may send a reminder to the user to confirm his or her privacy settings every six months or after every ten photo posts. In particular embodiments, privacy settings may also allow users to control access to the objects or information on a per-request basis. As an example and not by way of limitation, the system 100 may notify the user whenever an external system 130 attempts to access information associated with the user, and require the user to provide verification that access should be allowed before proceeding.

What has been described and illustrated herein are embodiments of the disclosure along with some variations. The terms, descriptions, and figures used herein are set forth by way of illustration only and are not meant as limitations. Many variations are possible within the scope of the disclosure, which is intended to be defined by the following claims-and their equivalents-in which all terms are meant in their broadest reasonable sense unless otherwise indicated.

## Claims

1. A system, comprising:
a processor;
a memory storing instructions, which when executed by the processor, cause the processor to:
receive digital content from a digital content provider to be distributed to one or more client devices associated with one or more users;
generate a plurality of thumbnail candidates based on the digital content using a thumbnail generation technique;
select a subset of thumbnails from the plurality of thumbnail candidates; and
transmit at least one of the subset of thumbnail candidates to be presented with the digital content at one or more client devices.

2. The system of claim 1, wherein the thumbnail generation technique comprises:
identifying a plurality of concepts in image stills of the digital content using a computer vision technique, wherein the computer vision technique comprises at least one of image classification, object detection, object tracking, semantic segmentation, or instance segmentation;
selecting the image stills based on distinctiveness of concepts from the identified plurality of distinct concepts; and
generating the plurality of diverse thumbnail candidates based on the selected image stills.

3. The system of claim 2, wherein selecting the image stills comprises scoring each of image stills with a value, wherein the value is indicative of the distinctiveness of concepts in the image stills, and, optionally, wherein the value for each the image stills is used for ranking or categorizing the generated thumbnail candidates.

4. The system of claim 1, wherein the subset of thumbnails is identified by a machine learning technique as having a likelihood of stimulating user interaction to preview the digital content.

5. The system of claim 5, wherein the machine learning technique is used to identify concepts in the plurality of diverse thumbnail candidates and match the concepts with information associated with the one or more users, or wherein the machine learning technique comprises use of at least one of a neural network, a tree-based model, a Bayesian network, a support vector, clustering, a kernel method, a spline, or a knowledge graph.

6. A method, comprising:
receiving, by a processor, digital content from a digital content provider to be distributed to one or more client devices associated with one or more users;
identifying, by the processor, at least one concept in the digital content using a computer vision technique;
generating, by the processor, a plurality of diverse thumbnail candidates using a thumbnail generation technique based on the digital content;
selecting, by the processor, a subset of thumbnails from the plurality of thumbnail candidates; and
transmitting, by the processor, at least one of the subset of thumbnail candidates to be presented with the digital content at one or more client devices.

7. The method of claim 8, wherein the computer vision technique comprises at least one of image classification, object detection, object tracking, semantic segmentation, or instance segmentation.

8. The method of claim 8, wherein the thumbnail generation technique comprises scoring each of the plurality of diverse thumbnail candidates with a value, and, optionally, wherein the value for each the plurality of diverse thumbnail candidates is used for ranking the thumbnail candidates.

9. The method of claim 8, wherein the subset of thumbnails is identified by a machine learning technique as having a likelihood of stimulating user interaction to preview the digital content.

10. The method of claim 12, wherein the machine learning technique is used to identify concepts in the plurality of diverse thumbnail candidates and match the concepts with information associated with the one or more, or wherein the machine learning technique comprises use of at least one of a neural network, a tree-based model, a Bayesian network, a support vector, clustering, a kernel method, a spline, or a knowledge graph.

11. A non-transitory computer-readable storage medium having an executable stored thereon, which when executed instructs a processor to perform the method of any of claims 6 to 10 or to:
receive digital content from a digital content provider to be distributed to one or more client devices associated with one or more users;
generate a plurality of diverse thumbnail candidates based on the digital content using a thumbnail generation technique;
select a subset of thumbnails from the plurality of thumbnail candidates; and
transmit at least one of the selected subset of thumbnails to be presented with the digital content at one or more client devices.

12. The non-transitory computer-readable storage medium of claim 15, wherein the thumbnail generation technique comprises use of computer vision to generate the plurality of diverse thumbnail candidates.

13. The non-transitory computer-readable storage medium of claim 16, wherein the thumbnail generation technique comprises scoring each of the plurality of diverse thumbnail candidates with a value.

14. The non-transitory computer-readable storage medium of claim 17, wherein the value for each the plurality of diverse thumbnail candidates is used for ranking the thumbnail candidates.

15. The non-transitory computer-readable storage medium of claim 15, wherein the subset of thumbnails is identified by a machine learning technique as having a likelihood of stimulating user interaction to preview the digital content, and, optionally, wherein the machine learning technique is used to identify concepts in the plurality of diverse thumbnail candidates and match the concepts with information associated with the one or more users.
